# EUROPÄISCHE PATENTSCHRIFT

(11) **EP 1 201 073 B1**
(45) Veröffentlichungstag und Bekanntmachung des Hinweises auf die Patenterteilung: **27.10.2010**
(21) Anmeldenummer: 00954369.5
(22) Anmeldetag: 25.07.2000
(51) Int. Cl.: H04M 3/42, H04M 3/493, H04M 11/00

(54) **VERFAHREN ZUR HERSTELLUNG VON KOMMUNIKATIONSVERBINDUNGEN ZU EINER, EINEM FAHRZEUG ODER SONSTIGEN MOBILEN ODER ORTSFESTEN EINRICHTUNG ZUGEORDNETEN, VORZUGSWEISE MOBILEN KOMMUNIKATIONSENDEINRICHTUNG MITTELS KENNNUMMER**
METHOD FOR SETTING UP COMMUNICATION LINKS WITH A COMMUNICATION TERMINAL, PREFERABLY MOBILE, ASSIGNED TO A VEHICLE OR TO ANY OTHER MOBILE OF STATIONARY DEVICE
PROCEDE D'ETABLISSEMENT DE LIAISONS DE COMMUNICATION AVEC UN TERMINAL DE COMMUNICATION DE PREFERENCE MOBILE, AFFECTE A UN VEHICULE OU A UN AUTRE DISPOSITIF MOBILE OU FIXE, AU MOYEN DE NUMEROS D'IDENTIFICATION

(30) Priorität: 26.07.1999 DE 19934145
(43) Veröffentlichungstag der Anmeldung: 02.05.2002
(73) Patentinhaber: T-Mobile Deutschland GmbH, 53227 Bonn (DE)
(72) Erfinder: KELLER, Walter, D-40880 Ratingen (DE)
(74) Vertreter: Riebling, Peter
(86) Internationale Anmeldenummer: PCT/DE2000/002455
(87) Internationale Veröffentlichungsnummer: WO 2001/008391

(56) Entgegenhaltungen:
- EP-A- 0 841 828
- DE-A- 19 704 085
- DE-A- 19 756 035
- US-A- 5 016 270
- US-A- 5 668 880

## Beschreibung

Die Erfindung betrifft ein Verfahren zur Herstellung von Kommunikationsverbindungen zu einer, einem Fahrzeug oder sonstigen mobilen oder ortsfesten Einrichtung zugeordneten, vorzugsweise mobilen Kommunikationsendeinrichtung mittels Kennummer.

Im heutigen dichten Straßenverkehr wäre es häufig wünschenswert, wenn der Halter oder Fahrer eines Kraftfahrzeuges, dessen Name und Telefonnummer unbekannt sind, in Notsituationen, aber auch in beliebigen anderen denkbaren Situationen, über ein öffentliches Telekommunikationsnetz jederzeit von jedermann erreichbar wäre.
Wegen der naheliegenden mobilen Situation von Anrufer und Angerufenem sowie der zunehmenden Verbreitung mobiler Netze und Endgeräte bietet sich als Telekommunikationsnetz beispielsweise insbesondere die Verwendung eines Mobilfunknetzes an.

Aus der DE-A-197 04 085 ist ein Kommunikationssystem bekannt, welches zur drahtlosen Kommunikation zwischen Fahrzeugen geeignet ist, wobei die Kommunikationseinrichtung jedes Fahrzeugs über das Fahrzeugkennzeichen identifizierbar und anwählbar ist. Hierbei ist es vorgesehen, dass die Kommunikationseinrichtungen der Fahrzeuge direkt, d.h. ohne vermittelnde Stelle, miteinander kommunizieren. Es ist zwar angedeutet, dass die Kommunikation auch über ein öffentliches Telekommunikationsnetz durchgeführt werden kann, jedoch ist hierzu nichts näheres in ausgeführt.

Die DE-A-197 56 035 lehrt ein Direktwahlverfahren für Mobiltelefone, bei dem ein Teilnehmer seiner Rufnummer eine frei wählbare alphanumerische Anschlusskennung zuordnen kann, unter der er auch erreichbar ist.

Die EP-A-0 841 828 offenbart ein Verfahren zur Abfrage von Daten aus einer Datenbank. Die Abfrage der Daten wird begleitend zu einem Telefonanruf eines ersten Teilnehmers bei einem zweiten Teilnehmer durchgeführt, wobei die Datenbank Serviceinformationen und Teilnehmerdaten des zweiten Teilnehmers enthält. Nachdem der anrufende Teilnehmer von der Datenbank identifiziert wurde, werden die entsprechenden Informationen aus der Datenbank des zweiten Teilnehmers an ihn übermittelt.

Der vorliegenden Erfindung liegt die Aufgabe zugrunde, ein Verfahren vorzuschlagen, auf dessen Basis die Herstellung einer Kommunikationsverbindung über öffentliche bzw. private Kommunikationsnetze, vorzugsweise Mobilfunknetze, zu einer, einem Fahrzeug oder einer betreffenden Einrichtung zugeordneten Kommunikationseinrichtung realisiert werden kann, obwohl der Name des Teilnehmers bzw. die Rufnummer der Telekommunikationseinrichtung unbekannt sind.

Gelöst wird diese Aufgabe durch die Merkmale des Patentanspruchs 1.

Wesentliches Merkmal der Erfindung ist die Verwendung einer Servereinrichtung innerhalb oder in Anschaltung an ein Telekommunikationsnetz, derart, daß sie über zumindest je eine Ein- und Auswahlsteuerungseinrichtung (Verbindungssteuerung) zum Telekommunikationsnetz sowie über Kennzeichenregister verfügt, denen jeweils mindestens eine Rufnummer bzw. Netzadresse einer zugehörigen Telekommunikationseinrichtung des gleichen oder eines externen Telekommunikationsnetzes zugeordnet sind, wobei bei einer Anfrage unter Verwendung eines im Kennzeichenregister gespeicherten Kennzeichens automatisch oder teilnehmergesteuert ein Verbindungsaufbau unter Verwendung der dem Kennzeichen zugeordneten Rufnummer zu dem zugehörigen Telekommunikationsendgerät erfolgt.

Der Vorteil des erfindungsgemäßen Verfahren liegt darin, daß es einem Teilnehmer eines Kommunikationsnetzes möglich ist, eine Verbindung zu einem anderen Teilnehmer des selben oder eines anderen Kommunikationsnetzes aufzubauen, obwohl dem ersten Teilnehmer der Name und die Telefonnummer des anderen Teilnehmers unbekannt sind. Voraussetzung hierfür ist, daß zumindest der anzurufende Teilnehmer im Kennzeichenregister der Servereinrichtung registriert ist.

Vorteilhafte Ausführungsformen und Weiterbildungen der Erfindung sind Gegenstand der abhängigen Patentansprüche.

In einer bevorzugten Ausführungsform der Erfindung wird das Kennzeichen, z.B. eine Kraftfahrzeugnummer, als Teil der zu wählenden Service-Telefonnummer herangezogen. Dadurch ist ein sehr einfaches Anwahlverfahren gegeben.

Das gleiche Verfahren kann bei beliebigen anderen Verkehrsmitteln, wie beispielsweise in der Luftfahrt, der Seefahrt, bei Schienenfahrzeugen, Bussen, Taxen etc. für eine allgemeine Erreichbarkeit insbesondere der Fahrer herangezogen werden, wenn die betreffenden Fahrzeuge oder Einrichtungen über eine entsprechende individuelle Kennzeichnung verfügen.

Für besondere Bedarfsgruppen und Anwendungsfälle läßt sich auch eine Kombination mit einem entsprechenden Berechtigungsverfahren zur Herstellung der Verbindung kombinieren. Insbesondere wenn beispielsweise Automaten, Telemetrie- oder Steuerungseinrichtungen, Eisenbahnwagen, Container etc. über eine entsprechende Verfahrensweise der Zuordnung einer Geräte- oder Standortkennung erreichbar sind.

Insbesondere bei solchen Verbindungen, wo Daten übertragen werden, ist alternativ zur Rufnummer in vorgenanntem Beispiel eine Erreichbarkeit mittels datennetzspezifischen Adressverfahren (beispielsweise IP-Adresse oder e-mail-Adresse) anstelle der in Sprachnetzen üblichen Rufnummer erforderlich.

Die Erfindung wird unter Verwendung von Zeichnungsfiguren, die hier lediglich eine mögliche Ausführungsart am Beispiel des verbreiteten GSM-Netzes in schematischer Darstellung beschreiben, erläutert, wobei sich anhand der Zeichnungsfiguren weitere Merkmale, Vorteile und Anwendungsgebiete der Erfindung ergeben. Es zeigen:
- Figur 1:: Blockschaubild für ein erfindungsgemäßes kennzeichenorientiertes Verbindungssystem;
- Figur 2:: Blockschaubild des möglichen Aufbaus eines Kennzeichenservers.

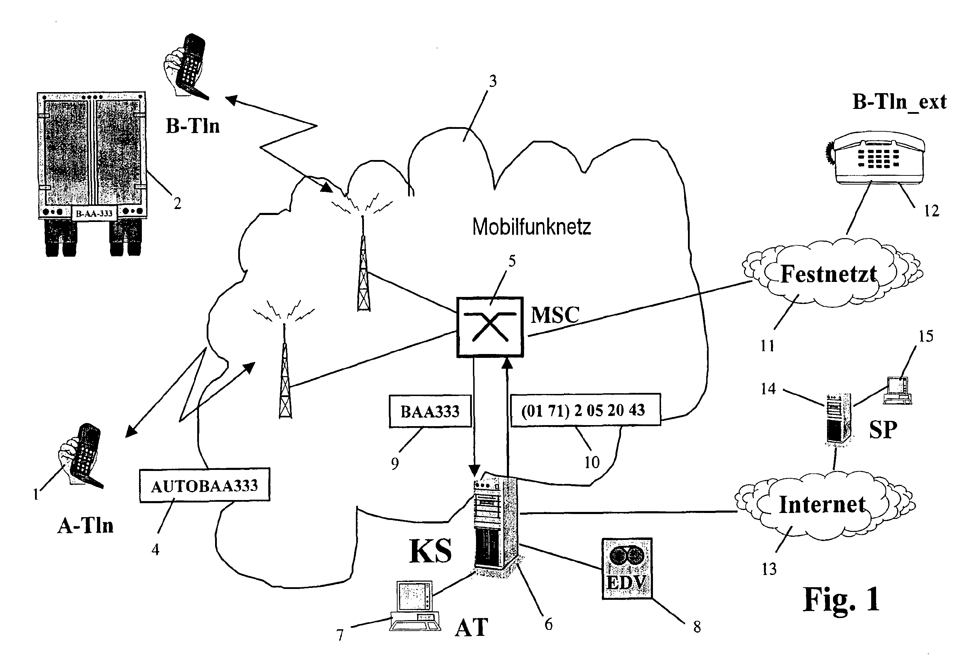

Gemäß Fig. 1 möchte ein Teilnehmer 1 eines Mobilfunknetzes 3 (A-Tln) den Halter oder Fahrer des Lastkraftwagens 2 mit dem Kennzeichen B-AA-333 beispielsweise in einer Notsituation wegen drohendem Ladungsverlust auf der Autobahn erreichen.
Hierzu stellt er zunächst eine Verbindung zum entsprechenden "Dienst" seines Mobilfunknetzes her, wobei er beispielsweise als Initiierung bzw. Dienstekennung im Kurzwahlverfahren die Buchstabenkombination "AUTO" gemäß der seinem Tastwahlblock zugeordneten Buchstabenfolgen seines Mobilfunkgerätes (Vanity-Verfahren) eingibt und daraufhin netzseitig in der Vermittlungsstelle 4 des Mobilfunknetzes 3 (Mobile Switching Center MSC) mit dem erfindungsgemäßen Kennzeichenserver 6 verbunden wird.

Der Kennzeichenserver 6 kann hierbei als dedizierte separate Hardwareeinrichtung oder netzspezifisch als Softwaremodul in der Vermittlungseinrichtung 5 (beispielsweise als Intelligent Network- /IN-Dienst) ausgeführt sein.

Der Teilnehmer 1 gibt in diesem Beispiel weiterhin das Kennzeichen BAA333 des Kraftfahrzeuges als "Zielrufnummer" in gleicher Verfahrensweise ein. Diese Zeichenfolge 4 wird an die Vermittlungsstelle übertragen. Der Kennzeichenserver 6 empfängt von der Vermittlungsstelle 5 die Zeichenfolge "BAA333" (9) und überprüft, ob dieses Kennzeichen in der Kennzeichendatenbank/Kennzeichenregister des Kennzeichenservers 6 als Referenzeintrag vorhanden ist. Im positiven Fall, wird aus dem jeweils zugeordneten Rufnummernregister die zugeordneten Rufnummer 10 (z.B. 0171..) bzw. Netzwerkadresse der zugeordneten Kommunikationseinrichtung automatisch entnommen und der Aufbau der Verbindung zum Fahrer des Lastkraftwagens 2 im gleichen Netz über eine Vermittlungseinrichtung 5 vorgenommen.

Alternativ kann bei diesem Verfahren auch die Rufnummer bzw. Adresse innerhalb eines anderen Kommunikationsnetzes, z.B. Festnetz 11, im Kennzeichenserver 6 gespeichert sein. Der Verbindungsaufbau erfolgt hierbei ebenfalls über die entsprechenden netzspezifischen Einrichtungen der Vermittlungsstelle 5 über das Festnetz 11 zum Festnetzteilnehmer 12 (B-Tln_ext).

Die zugeordnete Kommunikationseinrichtung kann ein beliebiges Kommunikationsendgerät sein, beispielsweise das Handy des Fahrers, die Festnetzanschluß einer Leitstelle oder Firmenzentrale, ein automatisches Empfangsgerät/ Modem innerhalb eines Automaten, eine Datenbankeinrichtung etc. In diesem Sinne kann für jedes Fahrzeug bzw. für jede Einrichtung eine individuelle oder alternativ eine gruppenspezifische Endgerätenummer zugeordnet werden.

Bei Vorschaltung eines entsprechenden optionalen Authentisierungsverfahrens, beispielsweise mittels entsprechender Geheimnummer, können ebenfalls optional unterschiedliche zugeordnete Rufnummern zu einem Kennzeichenregister vorhanden sein. Beispielsweise erreicht der Anrufer in diesem Fall bei der "Wahl" einer Taxinummer stets die zugeordnete Zentrale, während bei Kenntnis und menuegeführter Eingabe der Geheimnummer der Fahrer unmittelbar erreicht wird.

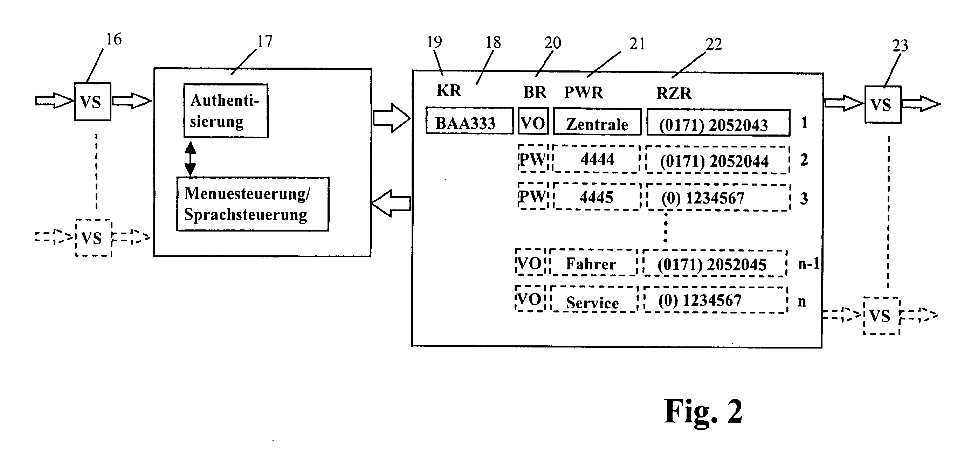

Fig 2 verdeutlicht diese Verfahrensweise. Der Kennzeichenserver ist über eine Verbindungssteuerung 16 an ein Kommunikationsnetz angebunden. Es ist vorzugsweise eine Menuesteuerungs- und Authentisierungseinrichtung 17 vorgesehen, die entsprechende Authentisierungssequenzen, z.B. ein Paßwort, auswertet und entsprechende Register in der Datenbank 18 freigibt oder sperrt. Die Datenbank umfasst dabei die eigentlichen Kennzeichenregister 19, Berechtigungsregister 20, Paßwortregister 21 und Register für die den Kennzeichen zugeordneten Rufnummern 22. Bei unauthorisierten Zugang wird in diesem Beispiel bei Kennzeichenangabe "BAA333" zur Rufnummer (0171) 2 05 20 43 weitervermittelt. Besitzt der Anrufer das Kennwort 4444, so gelangt er zu (0171) 2 05 20 44, besitzt er gar das Kennwort 4445, so wird er zur Festnetzrufnummer (0) 1234567 weitervermittelt.

In diesem Beispiel sind zwei weitere Optionen dargestellt. Der Registersatz n-1 enthält beispielsweise die zentrale Vertriebsrufnummer und der letzte Registersatz n die Rufnummer der Servicestelle des betreffenden Unternehmens (alles in Verbindung mit dem zugehörigen Fahrzeug mit o.g. Kennzeichen). Die Berechtigungsregister 20 dienen in Verbindung mit der optionalen Menuesteuerungs- und Authentisierungseinrichtung 17 zur Kennzeichnung, ob der betreffende Rufnummerneintrag mit besonderem Paßwortschutz gesichert ist, oder ob es sich um eine per Menuesteuerung für beliebige Anrufer bereitgestellte selektierbare Option handelt, die ihm nach Eingabe und kennzeichenserverseitige Erkennung der Kennzeichennummer optional angeboten wird.

Optional läßt sich als zusätzliches Sicherheitskriterium die Anrufernummer mit auswerten, wenn der, dem spezifischen Kennzeichen zugeordnete Registersatz entsprechend den berechtigten Anrufern erweitert wird und eine entsprechende Signalisierung zur Vermittlungsstelle vorhanden ist, über die die Rufnummer des anrufenden Teilnehmers zum Kennzeichenserver übertragen wird.

Die Administration der fahrzeugspezifischen Einträge erfolgt vorzugsweise über das üblich Administrationsterminal 7 seitens Netz- oder Servicebetreiber des Kennzeichenservers nach Benennung der entsprechenden Eintragungswünsche des betreffenden Teilnehmers oder alternativ im Remote-Verfahren beispielsweise über einen entsprechenden Internetzugang 13 eines Serviceproviders 14 oder Großkunden mit direktem Administrationszugang 15 zum Kennzeichenserver 6. Im letzten Fall verfügt der Server über zusätzliche Zugangssicherheits- und Schnittstellenfunktionen.

Optional ist die Verbindung zwischen Kennzeichenserver 6 und zumindest einer externen Datenbankeinrichtung möglich, die insbesondere dann sinnvoll ist, wenn beispielsweise ein Zugriff durch besonders berechtigte und durch ein optionales Authentisierungsverfahren im Kennzeichenserver gesicherte Benutzergruppen zum Kennzeichenserver erfolgt und die Rufnummer bzw. weitere Informationen nicht unmittelbar im KS vorhanden sind. Solch ein Fall kann beispielsweise die Anschaltung einer entsprechenden Datenbank einer Kraftfahrzeug- oder Schiffahrtsbehörde zwecks Ermittlung von Beispielsweise Fahrzeug- und Halterdaten sein, oder beispielsweise eine Betreibergesellschaft für installierte Automaten etc. In solch einem Fall kann die externe Datenbank wahlweise über eine eigene Menuesteuerung verfügen, oder es kann alternativ und optional eine, in der Regel anwendungsspezifische, Menuesteuerung im KS verwendet werden.

Ebenfalls optional verfügt der KS über direkte Schnittstellen zu mindestens einem oder mehreren Kommunikationsnetzen, zum Internet 13, zu Geschäftsteilnehmern (EDV-, LAN-Anschluß 8), bzw. zu Serviceprovidern 14, zu denen über eine oder mehrere der zugeordneten Nummern entsprechende Verbindungen aufgebaut werden können.

### Zeichnungslegende

- 1: Teilnehmer
- 2: Lastkraftwagen
- 3: Mobilfunknetz
- 4: Zeichenfolge
- 5: Vermittlungsstelle
- 6: Kennzeichenserver KS
- 7: Administrationsterminal AT
- 8: Datenbankeinrichtung
- 9: Zeichenfolge
- 10: Rufnummer
- 11: Festnetz
- 12: Festnetzteilnehmer
- 13: Internet
- 14: Serviceprovider SP
- 15: Internetteilnehmer
- 16: Verbindungssteuerung VS
- 17: Menuesteuerungs- und Authentisierungseinrichtung
- 18: Datenbank
- 19: Kennzeichenregister KR
- 20: Berechtigungsregister BR
- 21: Paßwortregister PWR
- 22: Rufnummernregister RZR
- 23: Verbindungssteuerung
- Pw: Paßwort
- VO: Verbindungsoption

## Patentansprüche

1. Verfahren zur Herstellung von Kommunikationsverbindungen zwischen einer ersten Kommunikationsendeinrichtung (1) und mindestens einer zweiten, einem Fahrzeug (2) zugeordneten mobilen oder ortsfesten Kommunikationsendeinrichtung, wobei eine Servereinrichtung (6) innerhalb oder in Anschaltung an ein Telekommunikationsnetz (3) derart ausgeführt ist, daß sie über zumindest je eine Ein- und Auswahlsteuerungseinrichtung (16, 23)zum Telekommunikationsnetz (3) sowie über Kennzeichenregister (19) verfügt, denen Rufnummernregister (22) mit jeweils mindestens einer Rufnummer bzw. Netzadresse einer zugehörigen Telekommunikationseinrichtung des gleichen oder eines externen Telekommunikationsnetzes (3; 11) zugeordnet sind,
wobei das Verfahren folgende Schritte umfasst:
Anwahl des Kennzeichenservers (6) unter Verwendung einer dienstespezifischen Rufnummer durch die erste Kommunikationsendeinrichtung (1) und Übermittlung eines individuellen Kennzeichens (4) des Fahrzeuges (2) als Wahlbestandteil der dienstespezifischen Rufnummer an den Kennzeichenserver (6),
Überprüfung, ob das übermittelte Kennzeichen (9) im Kennzeichenregister (6) als Referenzeintrag vorhanden ist, Adressierung des Registersatzes (20-22) der zugehörigen Rufnummer bzw. Rufnummern im Rufnummernregisters anhand des übermittelten und im Kenzeichenregister (19) vorhandenen Kennzeichens,
automatischer oder teilnehmergesteuerter Aufbau einer Verbindung unter Verwendung der dem Kennzeichen zugeordneten Rufnummer zu dem zugeordneten Telekommunikationsendgerät.

2. Verfahren gemäß Anspruch 1, **dadurch gekennzeichnet, daß** die in der Servereinrichtung (6) eingetragenen Daten für die Zuordnung und Umsetzung der fahrzeug- oder einrichtungsspezifischen Kennzeichnung zur telekommunikationsnetzspezifischen Rufnummer oder Netzadresse herangezogen werden.

3. Verfahren gemäß Anspruch 1 oder 2, **dadurch gekennzeichnet, daß** als Kennzeichen (4) eine numerische oder alphanumerische Zeichenfolge verwendet wird.

4. Verfahren gemäß einem der Ansprüche 1 bis 3, **dadurch gekennzeichnet, daß** mehrere einem Kennzeichen (4) zugeordnete Rufnummern in einem Rufnummernregister (22) vorhanden sind, die mittels Menuesteuerung (17) dem rufenden Teilnehmer (1) zur Auswahl angeboten werden.

5. Verfahren gemäß einem der Ansprüche 1 bis 4, **dadurch gekennzeichnet, daß** die Servereinrichtung (6) als physikalische oder als Softwarelösung im Telekommunikationsnetz (3) implementiert ist.

6. Verfahren gemäß einem der Ansprüche 1 bis 5, **dadurch gekennzeichnet, daß** die Servereinrichtung (6) mit einer akustischen oder visuellen Benutzerführung.in Form einer Menuesteuerung (17) ausgestattet ist.

7. Verfahren gemäß einem der Ansprüche 1 bis 6, **dadurch gekennzeichnet, daß** in der Servereinrichtung (6) eine zusätzliche Authentisierungseinrichtung (17) vorgesehen ist, die mittels Paßwörtern den Zugriff auf die zugeordnete Rufnummer bzw. auf zusätzliche zugeordnete Rufnummern ermöglicht.

8. Verfahren gemäß einem der Ansprüche 1 bis 7, **dadurch gekennzeichnet, daß** die Passwörter, personal identification codes, in besonderen, vorzugsweise den jeweiligen zugeordneten Rufnummern zugeordneten Paßwortregistern (21) als Referenz hinterlegt sind.

9. Verfahren gemäß einem der Ansprüche 1 bis 8, **dadurch gekennzeichnet, daß** den zugeorndeten Rufnummern zusätzlich
Berechtigungsregister (20) und Paßwortregister (21) zugeordnet sind, die die Art des Zugriffes bzw. der Verwendung der betreffenden zugeordneten Rufnummern beschreiben und insbesondere der funktionalen Kennzeichnung und der Zugriffssteuerung in Verbindung mit der Authentisierungs- und Menuesteuerungseinrichtung (17) dienen.

10. Verfahren gemäß einem der Ansprüche 1 bis 9, **dadurch**
**gekennzeichnet, daß** die Servereinrichtung (6) über zumindest ein Administrationsterminal (7) zwecks Eingabe und Konfiguration aller Daten verfügt und/oder über eine Client-Server-Steuerung sowie eine entsprechende sicherheitstechnische Zugriffssteuerungskomponente zur abgesetzten, remote, Anschaltung von Administrationsterminals für beispielsweise externe Großkunden oder Serviceprovider, die ihre Datenbestände selbst zumindest teilweise Pflegen können.

11. Verfahren gemäß einem der Ansprüche 1 bis 10, **dadurch**
**gekennzeichnet, daß** die Anschaltung zumindest einer externen Datenbank (8) an der Servereinrichtung (6) vorgesehen ist, die in Kombination mit einer Authentisierungs- und Menuesteuerungseinrichtung sowie einer zusätzlichen Datenbanksteuerungseinrichtung, Datenbankclient, den autorisierten Zugriff auf externe und in der Regel besonders gesicherten Daten für zumindest eine definierte Benutzergruppe ermöglicht.

12. Verfahren gemäß einem der Ansprüche 1 bis 11, **dadurch**
**gekennzeichnet, daß** bei Anschluß der externen Datenbank (8) die Benutzersteuerung zur Ein- bzw. Ausgabe der Daten an der Servereinrichtung (6) vorgenommen wird.

13. Verfahren gemäß einem der Ansprüche 1 bis 12, **dadurch**
**gekennzeichnet, daß** die Anschaltung zumindest eines externen Kommunikationsnetzes (11), die direkte Anschaltung von Groß- und Geschäftskunden, Intranet-, LAN- und Serverwelt, bzw. die Anschaltung zum Internet (13) an der Servereinrichtung (6) durchgeführt ist.

14. Verfahren gemäß einem der Ansprüche 1 bis 13, **dadurch**
**gekennzeichnet, daß** bei Anschluß eines externen Telekommunikationsnetzes (11, 13), Intranet- bzw. Internetanschluss eine erweiterte Benutzersteuerung zur Ein- bzw. Ausgabe von Daten in der Servereinrichtung (6) vorgenommen wird.

15. Verfahren gemäß einem der Ansprüche 1 bis 14, **dadurch**
**gekennzeichnet, daß** die Servereinrichtung (6) über zusätzliche eingangsseitige Verbindungssteuerungseinrichtungen (16) verfügt, um aus unterschiedlichen Telekommunikationsnetzen (3, 11), oder dem Internet (13) aus direkt erreichbar zu sein und somit der erfindungsgemäße Service in unterschiedlichen Netzen direkt angeboten werden kann.

16. Verfahren gemäß einem der Ansprüche 1 bis 15, **dadurch**
**gekennzeichnet, daß** die Servereinrichtung (6) in allen angeschlossenen Netzen (3, 11, 13) in einer bevorzugten Konfiguration über die gleiche vorzugsweise Kurzwahlnummer, beispielsweise AUTO, erreichbar ist.

17. Verfahren gemäß einem der Ansprüche 1 bis 16, **dadurch**
**gekennzeichnet, daß** das Verfahren bei entsprechender individueller Kennzeichnung für beliebige mobile Verkehrsmittel, wie Personen-, Fracht- und Baustellenfahrzeuge, Boote, Flugzeuge, Wagons etc. sowie beliebige mobile bzw. ortsfeste Einrichtungen, wie Container, Automaten, Meßwert- und Erfassungsstationen etc. verwendbar ist.

## Claims

1. Method for producing communications connections between a first communications terminal (1) and at least one second mobile or stationary communications terminal assigned to a vehicle (2), wherein a server device (6) is realised within or connected to a telecommunications network (3) such that it has at least in each case one dial-in and selection control device (16, 23) to the telecommunications network (3) and identification registers (19), to which call number registers (22) having in each case at least one call number or network address of an associated telecommunications device of the same or an external telecommunications network (3; 11) are assigned, wherein the method comprises the following steps:
dialling the identification server (6) using a service-specific call number by means of the first communications terminal (1) and transferring an individual identification (4) of the vehicle (2) as a dial component of the service-specific call number to the identification server (6),
checking whether the transferred identification (9) is present in the identification register (6) as a reference entry, addressing the register set (20-22) of the associated call number or call numbers in the call number register using the transferred identification present in the identification register (19),
automatic or subscriber-controlled set-up of a connection using the call number assigned to the identification to the assigned telecommunications terminal.

2. Method according to claim 1, **characterised in that** the data entered in the server device (6) are used for the assignment and conversion of the vehicle-specific or device-specific identification to the telecommunications network-specific call number or network address.

3. Method according to claim 1 or 2, **characterised in that** a numeric or alphanumeric character string is used as the identification (4).

4. Method according to one of claims 1 to 3, **characterised in that** several call numbers assigned to an identification (4) are present in a call number register (22) and are offered for selection to the calling subscriber (1) by means of menu control (17).

5. Method according to one of claims 1 to 4, **characterised in that** the server device (6) is implemented as a physical solution or as a software solution in the telecommunications network (3).

6. Method according to one of claims 1 to 5, **characterised in that** the server device (6) is equipped with an acoustic or visual user interface in the form of a menu control (17).

7. Method according to one of claims 1 to 6, **characterised in that** an additional authentication device (17), which facilitates access to the assigned call number or to additional assigned call numbers by means of passwords, is provided in the server device (6).

8. Method according to one of claims 1 to 7, **characterised in that** the passwords, personal identification codes, are filed as a reference in special password registers (21) assigned preferably to the particular assigned call numbers.

9. Method according to one of claims 1 to 8, **characterised in that** authorisation registers (20) and password registers (21), which describe the type of access or the use of the relevant assigned call numbers and in particular serve for functional identification and access control in connection with the authentication and menu-control device (17), are additionally assigned to the assigned call numbers.

10. Method according to one of claims 1 to 9, **characterised in that** the server device (6) has at least one administration terminal (7) for the purpose of input and configuration of all data and/or has a client-server control and a corresponding security access control component for the transmitted, remote, connection of administration terminals for example for external large-scale customers or service providers who may at least partly maintain their data stocks themselves.

11. Method according to one of claims 1 to 10, **characterised in that** the connection of at least one external database (8) to the server device (6) is provided which in combination with an authentication and menu-control device and an additional database control device, database client, facilitates the authorised access to external and usually particular secured data for at least one defined user group.

12. Method according to one of claims 1 to 11, **characterised in that** on connection of the external database (8), the user control for input or output of data is carried out at the server device (6).

13. Method according to one of claims 1 to 12, **characterised in that** the connection of at least one external communications network (11), the direct connection of large-scale customers and business customers, Intranet, LAN and server world, or the connection to the Internet (13) is carried out at the server device (6).

14. Method according to one of claims 1 to 13, **characterised in that** on connection of an external telecommunications network (11, 13), Intranet or Internet connection, an expanded user control for the input or output of data is carried out in the server device (6).

15. Method according to one of claims 1 to 14, **characterised in that** the server device (6) has additional input-side connection control devices (16) to be directly reachable from different telecommunications networks (3, 11), or from the Internet (13) and hence the service of the invention may be offered directly in different networks.

16. Method according to one of claims 1 to 15, **characterised in that** the server device (6) can be reached in all connected networks (3, 11, 13) in a preferred configuration via the same preferably speed dial number, for example AUTO.

17. Method according to one of claims 1 to 16, **characterised in that** the method can be used with appropriate individual identification for any mobile means of transport, such as car, freight and construction site vehicles, boats, aeroplanes, wagons etc. and any mobile or stationary devices, such as containers, machines, measured value and recording stations etc.

## Revendications

1. Procédé pour établir des liaisons de communication entre un premier terminal de communication (1) et au moins un deuxième terminal de communication, mobile ou fixe, associé à un véhicule (2), un dispositif serveur (6) étant conçu, à l'intérieur d'un réseau de télécommunication (3) ou en liaison avec celui-ci, de telle sorte qu'il dispose d'au moins un dispositif de commande de sélection directe ou indirecte (16, 23) vers le réseau de télécommunication (3) et de registres d'identification (19) auxquels sont associés des registres de numéros d'appel (22) avec chacun un numéro d'appel ou une adresse de réseau d'un dispositif de télécommunication correspondant du même réseau de télécommunication ou d'un réseau de télécommunication externe (3 ; 11), le procédé comprenant les étapes suivantes :
numérotation du serveur d'identification (6), à l'aide d'un numéro d'appel propre au service, par le premier terminal de communication (1) et transmission d'une identification individuelle (4) du véhicule (2), comme élément de numérotation du numéro d'appel propre au service, au serveur d'identification (6),
vérification pour voir si l'identification transmise (9) existe dans le registre d'identifications (6) comme inscription de référence, adressage de l'article de registre (20-22) du ou des numéros d'appel associés dans le registre de numéros d'appel à l'aide de l'identification transmise et présente dans le registre d'identifications (19),
établissement, automatique ou commandé par l'abonné, d'une liaison avec le terminal de télécommunication associé, à l'aide du numéro d'appel associé à l'identification.

2. Procédé selon la revendication 1, **caractérisé en ce que** les données inscrites dans le dispositif serveur (6) sont utilisées pour associer et convertir l'identification propre au véhicule ou au dispositif au/en numéro d'appel ou adresse de réseau propre au réseau de télécommunication.

3. Procédé selon la revendication 1 ou 2, **caractérisé en ce qu'**on utilise comme identification (4) une suite de caractères numériques ou alphanumériques.

4. Procédé selon l'une des revendications 1 à 3, **caractérisé en ce qu'**il y a dans un registre de numéros d'appel (22) plusieurs numéros d'appel (44) associés à un identifiant (4), parmi lesquels l'abonné appelant (1) peut faire une sélection à l'aide d'une commande par menu (17).

5. Procédé selon l'une des revendications 1 à 4, **caractérisé en ce que** le dispositif serveur (6) est mis en oeuvre comme dispositif physique ou comme solution logicielle dans le réseau de télécommunication (3).

6. Procédé selon l'une des revendications 1 à 5, **caractérisé en ce que** le dispositif serveur (6) est équipé d'un guide d'utilisateur acoustique ou visuel sous la forme d'une commande par menu (17).

7. Procédé selon l'une des revendications 1 à 6, **caractérisé en ce qu'**il est prévu dans le dispositif serveur (6) un dispositif d'authentification supplémentaire (17) qui permet, à l'aide de mots de passe, d'accéder au numéro d'appel associé ou à des numéros d'appel associés supplémentaires.

8. Procédé selon l'une des revendications 1 à 7, **caractérisé en ce que** les mots de passe, personal identification codes, sont stockés comme référence dans des registres de mots de passe (21) spéciaux, de préférence associés aux numéros d'appel associés.

9. Procédé selon l'une des revendications 1 à 8, **caractérisé en ce qu'**il est prévu en supplément, associés aux numéros d'appel associés, des registres d'autorisation (20) et des registres de mots de passe (21) qui décrivent le type d'accès et d'utilisation des numéros associés concernés, et qui servent en particulier à l'identification fonctionnelle et à la commande d'accès, en liaison avec le dispositif d'authentification et de commande par menu (17).

10. Procédé selon l'une des revendications 1 à 9, **caractérisé en ce que** le dispositif serveur (6) dispose d'au moins un terminal d'administration (7) en vue d'entrer et de configurer toutes les données, et/ou d'une commande client-serveur et d'un composant de commande d'accès correspondant de sécurité pour la connexion à distance de terminaux d'administration pour des gros clients ou fournisseurs de services par exemple externes qui peuvent gérer au moins en partie leurs données eux-mêmes.

11. Procédé selon l'une des revendications 1 à 10, **caractérisé en ce que** la connexion est prévue entre au moins une banque de données externe (8) et le dispositif serveur (6) qui, en combinaison avec un dispositif d'authentification et de commande par menu et avec un dispositif de commande de banque de données supplémentaire, le client de banque de données, permet pour au moins un groupe d'utilisateurs défini l'accès autorisé à des données externes et généralement particulièrement protégées.

12. Procédé selon l'une des revendications 1 à 11, **caractérisé en ce que** lors de la connexion de la banque de données externe (8), la commande d'utilisateur pour l'entrée et la sortie des données se fait au niveau du serveur (6).

13. Procédé selon l'une des revendications 1 à 12, **caractérisé en ce que** la connexion d'au moins un réseau de communication externe (11), la connexion directe de gros clients et d'une clientèle commerciale, du domaine Intranet, LAN et serveur ou la connexion avec Internet (13) est réalisée au niveau du dispositif serveur (6).

14. Procédé selon l'une des revendications 1 à 13, **caractérisé en ce que** lors de la connexion d'un réseau de télécommunication externe (11, 13), Intranet ou Internet, une commande d'utilisateur étendue est réalisée dans le dispositif serveur (6) pour l'entrée et la sortie de données.

15. Procédé selon l'une des revendications 1 à 14, **caractérisé en ce que** le dispositif serveur (6) dispose de dispositifs de commande de liaison supplémentaires, côté entrée (16) pour pouvoir être atteint directement à partir de différents réseaux de télécommunication (3, 11) ou d'Internet (13) et pour que le service de l'invention puisse ainsi être proposé directement dans différents réseaux.

16. Procédé selon l'une des revendications 1 à 15, **caractérisé en ce que** le dispositif serveur (6) peut être atteint dans tous les réseaux connectés (3, 11, 13) dans une configuration préférée, par l'intermédiaire du même numéro, de préférence un numéro abrégé, par exemple AUTO.

17. Procédé selon l'une des revendications 1 à 16, **caractérisé en ce qu'**il est utilisable, avec une identification individuelle correspondante, pour n'importe quels moyens de transport mobiles tels que des véhicules de tourisme, de marchandises et de chantier, des bateaux, des avions, des wagons, etc., et pour n'importe quels dispositifs mobiles ou fixes tels que des conteneurs, des machines automatiques, des stations de valeur de mesure et de saisie, etc.
